# EUROPÄISCHE PATENTSCHRIFT

(11) **EP 2 636 998 B1**
(45) Veröffentlichungstag und Bekanntmachung des Hinweises auf die Patenterteilung: **14.05.2014**
(21) Anmeldenummer: 12158554.1
(22) Anmeldetag: 08.03.2012
(51) Int. Cl.: G01D 5/347

(54) **Messwertgeber zum Erhalt einer Positionsinformation und Verfahren zu dessen Betrieb**
Data encoder for receiving position information and method for operating same
Dispositif d'établissement de valeurs de mesure pour obtenir une information de position et son procédé de fonctionnement

(43) Veröffentlichungstag der Anmeldung: 11.09.2013
(73) Patentinhaber: Siemens Aktiengesellschaft, 80333 München (DE)
(72) Erfinder: Zettner, Jürgen, 90587 Veitsbronn (DE); Schimmer, Jürgen, 90473 Nürnberg (DE); Wetzel, Ulrich, 91325 Adelsdorf (DE)

(56) Entgegenhaltungen:
- EP-A1- 1 420 229
- US-A- 5 965 879
- US-A1- 2007 146 730

## Beschreibung

Die Erfindung betrifft einen Messwertgeber zum Erhalt einer Positionsinformation sowie ein Verfahren zum Betrieb eines Messwertgebers. Solche Messwertgeber sind an sich bekannt. Exemplarisch kann auf sogenannte Inkrementalgeber verwiesen werden. Die Erfindung betrifft im Weiteren auch ein Aggregat mit einem solchen Messwertgeber, also zum Beispiel einen Antrieb oder einen Elektromotor, um dort als Positionsinformation eine Information in Bezug auf eine Geschwindigkeit oder Lage des Motors/Antriebs oder allgemein des jeweiligen Aggregats zu erhalten.

Der hier zu beschreibende Messwertgeber basiert auf einer optischen Abtastung einer Maßverkörperung. Dies ist zum Beispiel bei Inkrementalgebern ebenfalls bekannt.

Die EP 1 677 081 B1 schlägt die Verwendung einer diffraktiv wirkenden Maßverkörperung für einen Messwertgeber zum Erhalt einer Positionsinformation vor.

Noch nicht ganz optimal ist die Eignung solcher Messwertgeber für den industriellen Einsatz, speziell wenn es darum geht, besondere Anforderungen an die Genauigkeit und Verlässlichkeit der gelieferten Positionsinformationen zu erfüllen.

Auch aus der US 2007/146730 A ist die Verwendung einer diffraktiv wirkenden Maßverkörperung bekannt. Zur Erhöhung der Verlässlichkeit der gelieferten Positionsinformationen werden als Maßnahmen zur Korrektur von Fehlern Paritybits oder Prüfsummen vorgeschlagen.

Wenn bei im Stand der Technik bekannten Lösungen eine rotierende diffraktive Scheibe oder ein sonstiges Element mit einer entsprechenden Maßverkörperung mithilfe einer optischen Einheit (Sendediode und optischer Sensor) abgetastet und elektrisch ausgewertet wird, unterliegen die Bauteile und Baugruppen eines solchen diffraktiven Messwertgebers und deren Anbringung / Justierung aber immer gewissen mechanischen Toleranzen, die das empfangene Bild im optischen Sensor verschieben oder verzerren. Als Sensor kommen bisher im Wesentlichen einfache CCD-Zeilen oder sogenannte Pin-Dioden zum Einsatz, um die Kosten der Sensoreinheit möglichst gering zu halten. Allerdings kann bei sehr großen Verschiebungen oder Rotationen des empfangenen Bildes die Sensorfläche verlassen werden und eine fehlerhafte Positionsinformation, also zum Beispiel eine fehlerhafte Winkelmessung zur Folge haben. Somit sind die Toleranzen bei bisherigen Ausführungsformen diffraktiver Messwertgeber stark eingeschränkt. Dies wirkt sich wiederum negativ auf die Gesamtkosten (Herstellungskosten) des diffraktiven Messwertgebers aus, da die Herstellung so exakt erfolgen muss, dass mechanische Toleranzen auf ein Minimum reduziert sind.

Wenn aufgrund einer Abtastung einer Maßverkörperung resultierendes Bild nicht vollständig vom jeweiligen Sensor erfasst wird, sind Paritybits oder Prüfsummen (US 2007/146730 A) kaum geeignet um verlässliche Positionsinformationen zu erfassen.

Eine Aufgabe der Erfindung besteht entsprechend darin, einen auf einer Verwendung einer diffraktiv wirkenden Maßverkörperung basierenden Messwertgeber derart fortzubilden, dass eine Ermittlung einer Positionsinformation so weit wie möglich auch dann noch erfolgt, wenn der Messwertgeber nicht exakt justiert ist oder wenn sich eine Justierung im Betrieb, zum Beispiel aufgrund von Temperatureinflüssen, ändert.

Diese Aufgabe wird erfindungsgemäß mit einem Messwertgeber zum Erhalt einer Positionsinformation mit den Merkmalen des Anspruchs 1 gelöst. Dazu ist bei einem Messwertgeber zum Erhalt einer Positionsinformation, wobei mit einer Sende-/Empfangseinheit eine Maßverkörperung abgetastet wird, wobei die Maßverkörperung diffraktiv wirkende mikrostrukturierte Felder umfasst und wobei sich aufgrund einer Reflektion oder Transmission an der Maßverkörperung ein optischer Code ergibt, insbesondere vorgesehen, dass die Sende-/Empfangs-einheit zum Erfassen eines Bildes des optischen Codes zumindest einen flächigen Detektor mit einer Mehrzahl von optisch sensitiven Elementen umfasst, die jeweils in einer Mehrzahl von Zeilen und Spalten des Detektors angeordnet sind.

Der Vorteil der Erfindung besteht darin, dass mit der Verwendung eines flächigen Detektors, also zum Beispiel einem CCD-Array-Sensor, ein größerer Bereich von sich an der Maßverkörperung ergebenden Reflektionen oder Transmissionen erfasst werden kann. Bei einer ungenauen Justierung des Messwertgebers oder dessen Detektors ist damit auch dann noch eine Erfassung eines Bilds des optischen Codes möglich, wenn bei der im Stand der Technik gemäß der EP 1 677 081 B1 vorgeschlagenen Verwendung eines CCD-Zeilen-Sensors die relevanten Bildinformationen, also eine nullte oder erste Beugung aufgrund des optischen Codes oder höhere Beugungsordnungen gerade nicht mehr erfasst werden können.

Zudem bietet die Erfassung eines flächigen Bildes mit dem flächigen Detektor, also eines Bildes, das mit mehreren in einer Mehrzahl von Zeilen und Spalten des Detektors angeordneten sensitiven Elementen aufgenommen wird, Möglichkeiten, um die Auswertung des Bildes und eine Ableitung einer Positionsinformation daraus zu verbessern.

Dementsprechend ist vorgesehen, dass der optische Code redundante Informationen umfasst. Wenn der optische Code redundante Informationen umfasst, reicht es möglicherweise aus, wenn das von dem Detektor erfasste Bild des optischen Codes auch bei einer eventuellen Verschiebung oder Rotation zumindest so weit verwendbar ist, dass mit einer zusätzlichen Auswertung der redundanten Information die im optischen Code angelegte Information und damit im Wesentlichen die Positionsinformation ermittelbar ist.

Indem das Bild des optischen Codes auch ganz oder teilweise Beugungen höherer Ordnung desselben optischen Codes umfasst und eine Auswertung des Bilds des optischen Codes auch Plausibilitätskontrollen anhand der Beugungen höherer Ordnung umfasst, steigt Die Verlässlichkeit der von dem Messwertgeber gelieferten Positionsinformation nochmals an, denn wenn der zum Beispiel aufgrund einer Beugung nullter oder erster Ordnung resultierende optische Code in dem von dem Detektor aufgenommenen Bild nicht erfasst ist, wohl aber ein Bild des optischen Codes aufgrund einer Beugung höherer Ordnung, kann eventuell auch anhand solcher Beugungen höherer Ordnungen die in dem optischen Code enthaltene Positionsinformation abgeleitet werden. Wenn das von dem Detektor erfasste Bild des optischen Codes ganz oder teilweise Beugungen höherer Ordnung desselben optischen Codes umfasst, können zum Beispiel bei einer vollständigen Erfassung verschiedener Beugungsordnungen jede Beugungsordnung einzeln ausgewertet und anschließend die sich aufgrund jeder Beugungsordnung ermittelte Positionsinformation miteinander verglichen werden. Mit diesen Informationen ist es möglich, dass der Messwertgeber eine Positionsinformation nur dann bereitstellt, wenn die für die unterschiedlichen Beugungsordnungen ermittelten Positionsinformationen ganz oder innerhalb vorgegebener oder vorgebbarer Grenzen übereinstimmen. Alternativ kann auch vorgesehen sein, dass bei anhand von unterschiedlichen Beugungsordnungen resultierenden unterschiedlichen Positionsinformationen zum Beispiel ein Mittelwert oder dergleichen der einzelnen Positionsinformationen gebildet wird und dieser Mittelwert vom Messwertgeber als Ausgangssignal ausgegeben wird. Des Weiteren kann auch vorgesehen sein, dass als Positionsinformation zum Beispiel diejenige Positionsinformation ausgegeben wird, die sich aufgrund einer Auswertung einer niedrigsten erfassten Beugungsordnung ergibt und dass das Ausgangssignal anhand der Positionsinformationen aufgrund höherer Beugungsordnungen um eine Plausibilitätsinformation ergänzt wird, so dass eine das Ausgangssignal des Messwertgebers verwendende nachgeordnete Einheit anhand einer solchen Plausibilitätsinformation die Belastbarkeit des vom Messwertgeber gelieferten Ausgangssignals erkennen kann.

Vorteilhafte Ausgestaltungen der Erfindung sind Gegenstand der abhängigen Ansprüche. Dabei verwendete Rückbeziehungen weisen auf die weitere Ausbildung des Gegenstandes des Hauptanspruches durch die Merkmale des jeweiligen abhängigen Anspruches hin. Sie sind nicht als ein Verzicht auf die Erzielung eines selbständigen, gegenständlichen Schutzes für die Merkmalskombinationen der rückbezogenen abhängigen Ansprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer besonderen Ausführungsform des Messwertgebers ist vorgesehen, dass der optische Code zumindest zwei signifikante Bildelemente, üblicherweise drei, vier, fünf oder mehr signifikante Bildelemente umfasst, wobei signifikante Bildelemente in einem mit dem Detektor vom optischen Code aufnehmbaren Bild identifizierbar sind und wobei identifizierte signifikante Bildelemente als Grundlage für eine Auswertung des Bilds und für eine Ableitung einer Positionsinformation aus dem Bild verwendbar sind. Signifikante Bildelemente sind Bildelemente, nämlich insbesondere Gruppen von Bildpunkten, die in dem mit dem Detektor aufnehmbaren Bild grundsätzlich identifizierbar und somit von in dem Bild ansonsten enthaltenen Informationen unterscheidbar sind. Die Struktur der signifikanten Bildelemente wird demnach so gewählt, dass sich deren Form bei der Darstellung der von dem optischen Code umfassten Information nicht ergibt. Ein Beispiel für eine mögliche Gestalt eines solchen signifikanten Bildelements oder signifikanter Bildelemente ist danach eine 2x2 oder 3x3-Matrix, die jeweils bei Aufnahme eines entsprechenden Bildes mit dem Detektor durchgängig zu gesetzten Bildpunkten führt. Als Position einzelner oder mehrerer signifikanter Bildelemente kommt speziell ein Randbereich eines aufgrund eines optischen Codes resultierenden Bildes in Betracht. Bei einem aus einer Abtastung eines optischen Codes resultierenden Bild kann also bei einer Identifikation von zumindest zwei signifikanten Bildelementen automatisch eine Aussage darüber abgeleitet werden, ob das erfasste Bild in Bezug auf einen Aufnahmebereich des Detektors eventuell verschoben oder gedreht ist. Mit der Ableitung solcher Anhaltspunkte anhand identifizierter signifikanter Bildelemente sind diese als Grundlage für eine Auswertung des Bilds und einer Ableitung einer Positionsinformation daraus verwendbar.

Mit Rückgriff auf die Erläuterung in den vorangegangenen Absätzen sei hier angemerkt, dass die Verwendung von Begriffen wie Bild, Bildinformation, Bildelement und dergleichen im Zusammenhang mit der hier beschriebenen Erfindung mehrdeutig sein kann.
Grundsätzlich meinen diese Begriffe das von dem Detektor aufgenommene Bild oder Bestandteile davon. Allerdings ist zu berücksichtigen, dass sich das Bild aufgrund eines jeweils abgetasteten mikrostrukturell angelegten optischen Codes ergibt. Insofern umfasst die jeweilige Mikrostruktur innerhalb der Maßverkörperung bereits die Grundlage für ein sich bei deren Abtastung ergebendes Bild und zwar unabhängig davon, ob dieses mit einem Detektor ganz oder teilweise erfasst wird oder nicht.

Vor diesem Hintergrund rechtfertigt es sich, auch in Bezug auf die Mikrostruktur der Maßverkörperung von einem Bild oder Bildinformationen zu sprechen, nämlich dem in der Mikrostruktur angelegten Bild oder den in der Mikrostruktur angelegten Bildinformationen. Ähnliches gilt für den Begriff optischer Code. Der optische Code ist zunächst in der jeweiligen Mikrostruktur der Maßverkörperung angelegt. Bei Abtastung der Mikrostruktur entsteht - gleichfalls als optischer Code - ein Strahlenbüschel aufgrund einer Reflektion oder Transmission an der Mikrostruktur. Schließlich ist der optische Code selbstverständlich auch in einem Bild enthalten, das von einem ganz oder teilweise in einen solchen Strahlgang positionierten Detektor aufgenommen wird. Es ist also darauf hinzuweisen, dass speziell in Bezug auf die oben genannten Begriffe und ähnliche Ausdrücke jeweils der Sachzusammenhang Auskunft über die konkrete Bedeutung gibt.

Wenn der optische Code drei oder vier signifikante Bildelemente umfasst, die zum Beispiel im Bereich der Eckpunkte des optischen Codes angeordnet sind, lässt sich, speziell wenn alle drei oder vier signifikanten Bildelemente in dem durch den Detektor aufgenommenem Bild identifiziert werden können, eine genaue Aussage über eine etwaige Verschiebung, Rotation oder Skalierung des aufgenommenen Bildes treffen. Zusätzlich oder alternativ kann die Tatsache, ob alle signifikanten Bildelemente oder zumindest eine ausreichende Anzahl signifikanter Bildelemente identifiziert wurde, als Grundlage für eine Entscheidung, ob das Bild für eine Ableitung einer Positionsinformation verwendbar ist, hergenommen werden.

Bei einer besonderen Ausführungsform kommt in Betracht, dass der optische Code in einer matrixartigen Struktur eine Information und eine komplementäre Darstellung derselben Information, insbesondere eine konjugiert komplexe Darstellung derselben Information, umfasst. Dann ist es möglich, den optischen Code so anzulegen, dass in der matrixartigen Struktur zum Beispiel eine bestimmte Anzahl von Zeilen die jeweilige Information und andere Zeilen eine komplementäre Darstellung derselben Information enthalten. Selbst wenn dann zum Beispiel diejenigen Zeilen des optischen Codes, welche die eigentliche Information enthalten, aufgrund einer Fehljustierung oder anderer Effekte nicht von dem flächigen Detektor erfasst werden und damit nicht Bestandteil des aufgenommenen Bildes sind, besteht die Möglichkeit, die in dem optischen Code angelegte Information zu erfassen, zum Beispiel wenn die konjugiert komplexe Darstellung derselben Information vollständig von dem flächigen Detektor erfasst und damit Bestandteil des aufgenommenen Bildes geworden ist.

Eine andere Situation ergibt sich, wenn das aufgenommene Bild zum Beispiel nur Teile der Information und ebenfalls nur Teile der konjugiert komplexen Darstellung derselben Information umfasst. Dann ist es unter Umständen möglich, die fehlenden Bestandteile der Information aufgrund der erfassten Bestandteile der komplementären Darstellung derselben Information zu ergänzen oder zu rekonstruieren.

Bei einem Verfahren zum Betrieb eines Messwertgebers wie hier und nachfolgend beschrieben ist vorgesehen, dass mit dem Detektor ein Bild des optischen Codes aufgenommen wird, wobei in dem aufgenommenen Bild signifikante Bildelemente identifiziert werden und wobei identifizierte Bildelemente als Grundlage für eine Auswertung des Bildes verwendet werden, indem mit mindestens zwei identifizierten signifikanten Bildelementen eine Verschiebung oder eine Rotation oder eine Skalierung des aufgenommenen Bildes ermittelt wird.

Eine Identifizierung signifikanter Bildelemente erfordert, dass eine erwartete Form der signifikanten Bildelemente bekannt ist, was ohne weiteres möglich ist, denn diese sind Bestandteil des mikrostrukturell angelegten optischen Codes. Die signifikanten Bildelemente können demnach in dem von dem Detektor aufgenommenen Bild gesucht werden. Bei einem signifikanten Bildelement mit zum Beispiel einer 2x2- oder einer 3x3-Dimension kann sich also die Suche in dem aufgenommenen Bild auf eine Suche nach entsprechenden Abschnitten mit jeweils gleichmäßig gesetzten oder nicht gesetzten Bildpunkten beziehen. Wenn ein solcher Abschnitt gefunden wurde, ist ein signifikantes Bildelement identifiziert. Wichtig ist dabei vor allem die Position eines identifizierten signifikanten Bildelements in Bezug auf den Erfassungsbereich des Detektors, also in Bezug auf die matrixartige Struktur der davon umfassten optisch sensitiven Elemente. Wenn demnach mehrere signifikante Bildelemente identifiziert wurden und deren Position im aufgenommenen Bild ermittelt wurde, lässt sich aus den sich so ergebenden Positionsinformationen auf eine eventuelle Verschiebung, Rotation und/oder Skalierung des von dem optischen Code aufgenommenen Bildes schließen.

Dies kann als Grundlage für eine Auswertung des Bildes und für eine Ableitung einer Positionsinformation aus dem Bild verwendet werden, indem zum Beispiel eine Ableitung einer Positionsinformation nur dann erfolgt, wenn eine ausreichende Anzahl signifikanter Bildelemente identifiziert wurde und demnach feststeht, dass zumindest ein voraussichtlich ausreichender Ausschnitt aus dem optischen Code in dem aufgenommenen Bild enthalten ist. In einem optionalen weiteren Schritt kann in Ansehung einer eventuell festgestellten Verschiebung, Rotation und/oder Skalierung automatisch entschieden werden, ob eine festgestellte Verschiebung, Rotation und/oder Skalierung in einem Bereich bleibt, der noch eine sinnvolle Auswertung des aufgenommenen Bildes im Hinblick auf eine Ableitung einer Positionsinformation erlaubt.

Bei einer besonderen Ausführungsform des Verfahrens ist vorgesehen, dass eine ermittelte Verschiebung oder Rotation oder Skalierung des aufgenommenen Bildes automatisch kompensiert wird. Zur Vermeidung von Wiederholungen wird im Folgenden eine Verschiebung oder Rotation oder Skalierung des aufgenommenen Bildes einzeln oder zusammen als Verfälschung des aufgenommenen Bildes bezeichnet. Wenn eine solche Verfälschung des aufgenommenen Bildes kompensiert wird, kann das Bild trotz der Verfälschung ausgewertet werden und aus dem Bild eine Positionsinformation abgeleitet werden. Dies gewährleistet, dass der Messwertgeber auch dann noch Positionsinformationen liefert, wenn bei gleicher Konstellation mit bisherigen Messwertgebern keine oder keine verlässlichen Positionsinformationen mehr zu erhalten sind.

Bei einer Ausführungsform des Verfahrens zum Betrieb eines Messwertgebers wie hier und nachfolgend beschrieben ist vorgesehen, dass bei einer ermittelten Verschiebung oder Rotation oder Skalierung des aufgenommenen Bildes in dem Bild fehlende Teile des optischen Codes anhand der von dem optischen Code umfassten redundanten Information ergänzt werden. Wenn also aufgrund einer Verfälschung des aufgenommenen Bildes nur Teile des optischen Codes erfasst sind, kann anhand der identifizierten signifikanten Bildelemente und deren Position in dem erfassten Bild auf den Umfang der fehlenden Teile des optischen Codes geschlossen werden und dieser fehlende Teil soweit wie möglich aus den redundanten Informationen ergänzt werden. Die Position der identifizierten signifikanten Bildelemente liefert insoweit einen Anhalt für Start- und Randpunkte des optischen Codes und demnach einen Anhalt, welche Teile des optischen Codes eventuell nicht erfasst sind und welche Teile des optischen Codes für eine Ergänzung oder Rekonstruktion des nicht erfassten Teils des optischen Codes in Betracht kommen.

Bei einer weiteren Ausführungsform des Verfahrens ist vorgesehen, dass eine ermittelte Verschiebung oder Rotation oder Skalierung, also Verfälschung, des aufgenommenen Bildes kompensiert wird. Dabei kommen grundsätzlich zwei Möglichkeiten der Kompensation in Betracht. Zum einen kann auf das Bild eine Transformation angewandt werden, welche die ermittelte Verschiebung oder Rotation oder Skalierung rückgängig macht (kompensiert). Bei einer etwaigen Verfälschung, die sich zum Beispiel ausschließlich in einer Verschiebung des optischen Codes im aufgenommenen Bild nach rechts ausdrückt, kann das aufgenommene Bild entsprechend der festgestellten Verschiebung nach links verschoben werden, um zum Beispiel den optischen Code im aufgenommenen Bild zu zentrieren. Eine solche Verschiebung oder Drehung oder Skalierung des aufgenommenen Bildes zur Kompensation einer festgestellten Verfälschung wird einzeln oder zusammen als Transformation bezeichnet. Aus der sogenannten digitalen Bildverarbeitung sind Operatoren bekannt, die solche Transformationen (Translation, Rotation, Skalierung) bewirken. Eine andere Alternative zur Kompensation einer ermittelten Verfälschung des aufgenommenen Bildes besteht darin, dass bei einer Auswertung des Bildes eine Leseposition entsprechend der ermittelten Verfälschung angepasst wird. Zurückkommend auf das Beispiel einer Verschiebung als Verfälschung kann das Bild also entweder durch geeignete Transformation zum Beispiel wieder zentriert werden, um das Bild in Bezug auf eine definierte Leseposition auswerten zu können. Alternativ kann die Leseposition auch entsprechend der festgestellten Verschiebung oder dergleichen angepasst werden, um das gleiche Ergebnis zu erreichen.

Die oben genannte Aufgabe wird auch mit einem Messwertgeber zum Erhalt einer Positionsinformation gelöst, der nach dem oder den Verfahren wie hier und im Folgenden beschrieben arbeitet und dazu Mittel zur Durchführung des Verfahrens, einzelner Verfahren oder mehrerer Verfahren umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Messwertgeber oder eine den Messwertgeber enthaltende Einheit, also zum Beispiel ein Antrieb oder ein Antriebssystem, in dessen bzw. deren Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen Messwertgeber zur Abtastung einer optische Codes umfassenden Maßverkörperung zum Erhalt einer Positionsinformation,
- FIG 2: eine Darstellung eines Bildes eines mit einem vom Messwertgeber umfassten Detektor aufgenommenen optischen Codes,
- FIG 3: ein verfälschtes Bild eines optischen Codes und
- FIG 4: ein Beispiel für eine gleichzeitige Erfassung unterschiedlicher Beugungsordnungen desselben optischen Codes.

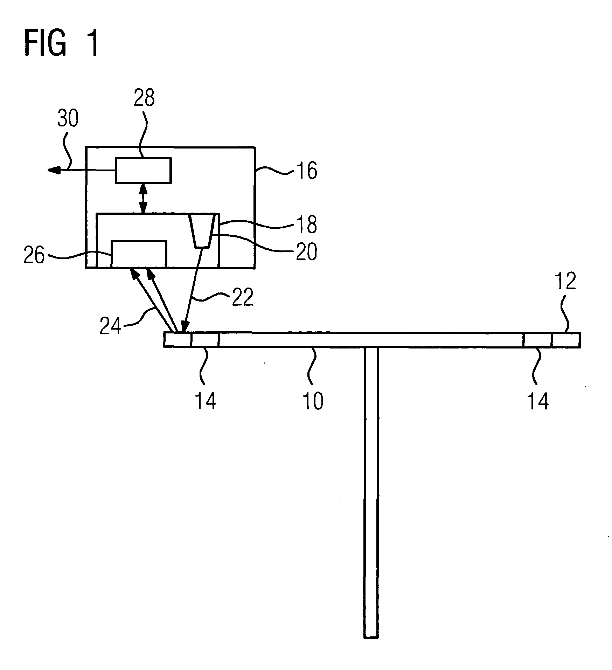

FIG 1 zeigt schematisch vereinfacht eine drehbare Scheibe 10 mit einer Maßverkörperung. Als Maßverkörperung sind - ebenfalls nur schematisch vereinfacht - eine Absolutspur 12 und eine Inkrementalspur 14 gezeigt. Die Maßverkörperung, also die Absolutspur 12 und/oder die Inkrementalspur 14, wird mit einem hier und im Folgenden auch nur kurz als Messwertgeber 16 bezeichneten Messwertgeber zum Erhalt einer Positionsinformation abgetastet. Gezeigt ist dies für eine Abtastung der Absolutspur 12.

Der Messwertgeber 16 umfasst zum Erhalt einer Positionsinformation eine Sende-/Empfangseinheit 18. Mit dieser wird die jeweilige Maßverkörperung 12, 14 abgetastet. Dazu umfasst die Sende-/Empfangseinheit 18 zumindest eine Strahlquelle 20 zum Erzeugen eines Abtaststrahls 22, also insbesondere eine Strahlquelle 20 zum Erzeugen eines Laserstrahls. Der Abtaststrahl 22 erfährt an der Maßverkörperung entweder eine Reflektion oder Transmission. Gezeigt ist eine Reflektion 24 und entsprechend ein reflektierter Strahl. Die beiden die Reflektion 24 darstellenden Pfeile sollen auch als Hinweis dafür stehen, dass bei einer besonderen Ausführungsform des Messwertgebers 16 und eines Verfahrens zu dessen Betrieb einerseits eine nullte oder erste Beugungsordnung der Reflektion 24 oder Transmission und andererseits höhere Beugungsordnungen (verdeutlicht durch den zweiten Pfeil) untersucht werden können.

Die Reflektion 24 oder Transmission liefert ein Bild eines in der abgetasteten Maßverkörperung mikrostrukturell angelegten optischen Codes. Zur Erfassung dieses Bilds ist als Detektor 26 ein flächiger Detektor 26 - im Folgenden mitunter kurz nur als Detektor 26 bezeichnet - mit einer Mehrzahl von optisch sensitiven Elementen vorgesehen, wobei diese optisch sensitiven Elemente in an sich bekannter Art und Weise in einer Mehrzahl von Zeilen und Spalten des Detektors 26 angeordnet sind. Als Detektor kommt demnach ein CCD-Array-Sensor, zum Beispiel der Mikrocontroller MSP430 der Anmelderin, in Betracht. Zur Auswertung des jeweils aufgenommenen Bildes ist eine Verarbeitungseinheit 28 in Form von oder nach Art eines Mikroprozessors vorgesehen. Die Verarbeitungseinheit 28 kann auch integraler Bestandteil der Sende-/Empfangseinheit 18 sein, wie dies beim Mikrocontroller MSP430 der Fall ist. Für die jeweilige Positionsinformation generiert der Messwertgeber 16 ein durch nachgeordnete Einheiten verarbeitbares Ausgangssignal 30.

Die drehbare Scheibe 10 ist nur ein Beispiel, wie sich mit einem Messwertgeber 16 eine Positionsinformation, hier eine Positionsinformation hinsichtlich der Rotationslage der Scheibe 10, erhalten lässt. Eine solche Scheibe 10 kann einem Antrieb (nicht dargestellt) und dort zum Beispiel einer Motorachse zugeordnet sein, um eine Drehzahl oder Rotationslage der Motorachse zu erfassen. Eine Scheibe 10 ist darüber hinaus auch nur ein Beispiel für einen Anbringungsort einer Maßverkörperung. Grundsätzlich könnte die Maßverkörperung zum Beispiel bei einem Antrieb auch direkt an der jeweils überwachten Achse, also zum Beispiel der Motorachse, angebracht sein.

Die Darstellung in FIG 1 ist dementsprechend vor allem im Hinblick auf zeichnerisch einfach darstellbare und damit übersichtliche Verhältnisse gewählt. Dabei ist speziell auch kein Augenmerk auf eine auch nur annähernd größenrichtige Darstellung von Absolut- und Inkrementalspur 12, 14 gelegt und es ist auch eine gleichzeitige Abtastung von Absolut- und Inkrementalspur 12, 14 und eine gleichzeitige Erfassung eines Bildes einer resultierenden Reflektion oder Transmission möglich. Schließlich sind auch Maßverkörperungen und deren Abtastung möglich und sinnvoll, die nur eine Absolutspur 12 oder nur eine Inkrementalspur 14 aufweisen.

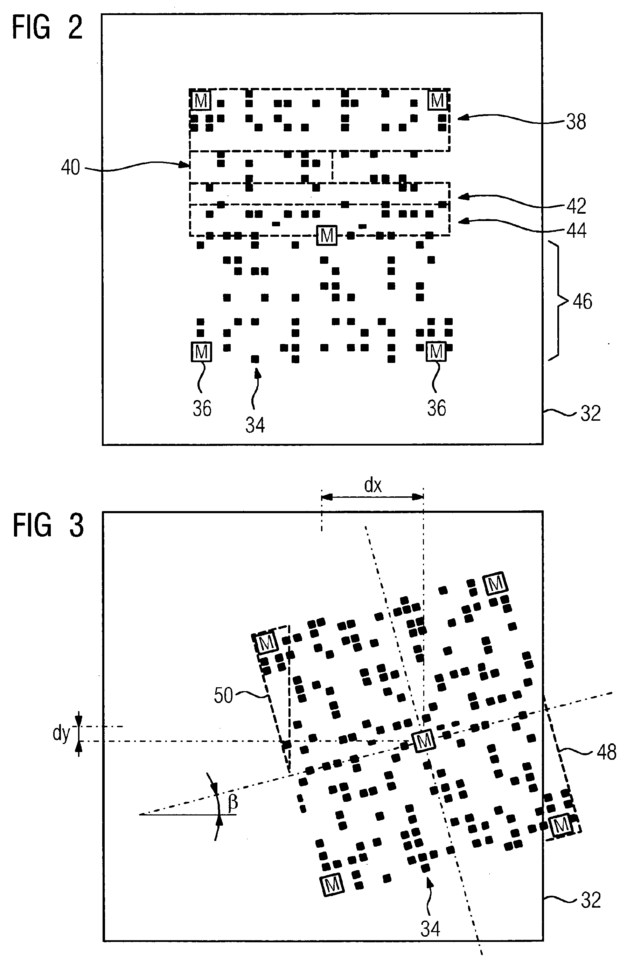

FIG 2 zeigt exemplarisch eine Darstellung eines Bildes eines mit dem Detektor 26 aufgenommenen optischen Codes. Hier wird nochmals die eingangs bereits erwähnte Mehrdeutigkeit bestimmter Begriffe deutlich, denn die Darstellung in FIG 2 zeigt zum einen das vom Detektor 26 aufgenommene Bild 32, aber auch den vom Bild 32 umfassten optischen Code 34. Der optische Code 34 und damit auch das in FIG 2 dargestellte, davon aufgenommene Bild 32 umfasst eine Anzahl signifikanter Bildelemente 36, die in der Darstellung mit dem Buchstaben "M" (für "Markerbits") hervorgehoben sind, wobei diese Darstellung lediglich die signifikante Bildelemente 36 von anderen jeweils nur als Punkte dargestellten Bildelementen für die weitere Beschreibung unterscheidbar machen soll. Tatsächlich handelt es sich bei den signifikanten Bildelementen 36 um eine Zusammenfassung von Bildpunkten, die hinsichtlich ihrer Ausdehnung in x- und y-Richtung und hinsichtlich des Status der davon umfassten Bildpunkte (gesetzt oder nicht gesetzt) vorbestimmt ist. Ein Beispiel für ein signifikantes Bildelement 36 ist eine 2x2-Matrix, die dementsprechend vier Bildpunkte umfasst, bei der alle Bildpunkte gesetzt sind.

Bei der Darstellung in FIG 2 umfasst der optische Code 34 / das davon aufgenommene Bild 32 fünf derartige signifikante Bildelemente 36, wobei nur einzelne derartige Bildelemente 36 mit dem entsprechenden Bezugszeichen bezeichnet sind. Die signifikanten Bildelemente 36 befinden sich in den Ecken des optischen Codes 34. Ein weiteres signifikantes Bildelement 36 befindet sich im Zentrum des optischen Codes 34. Anhand der signifikanten Bildelemente 36, zum Beispiel der beiden in FIG 2 oben gezeigten signifikanten Bildelemente 36, kann ein Startpunkt des aufgenommenen Bildes 32 und zum Beispiel eine Folge davon umfasster Bildpunkte als Kodierung einer absoluten Positionsinformation 38 identifiziert werden. In gleicher Weise kann eine andere Gruppe von Bildpunkten als sogenannte Dump Row 40, als elliptische Spur 42 und/oder als Zusatzinformation 44, die zum Beispiel ein Echtheitszertifikat, Spread Information und/oder Writebits umfasst, identifiziert werden. In gleicher Weise kann ein Abschnitt des optischen Codes 34 mit einer komplementären Darstellung 46 der von dem optischen Code 34 umfassten Information identifiziert werden.

FIG 3 zeigt ein verfälschtes Bild 32 eines optischen Codes 34. Die Verfälschung besteht ersichtlich darin, dass der optische Code 34 in Bezug auf das Bild 32 verschoben und gedreht ist, so dass der Detektor 26 den optischen Code 34 nicht vollständig erfasst hat und das vom Detektor 26 aufgenommene Bild 32 den optischen Code 34 entsprechend nicht vollständig umfasst.

Die Verfälschung ist hinsichtlich der Verschiebung in der Darstellung in FIG 3 mit dx und dy bezeichnet, um die Verschiebung jeweils in x- oder y-Richtung anzugeben. Die Rotation des optischen Codes 34 in Bezug auf das aufgenommene Bild 32 ist durch den Winkel β dargestellt. Die tatsächliche Verschiebung dx, dy und die Rotation β kann anhand einer Identifikation der signifikanten Bildelemente 36 (FIG 2; in FIG 3 nicht erneut bezeichnet) ermittelt werden.

Anhand der Anzahl und der Position identifizierter signifikanter Bildelemente 36 kann unabhängig von oder zusätzlich zu einer Erkennung einer Verschiebung oder Rotation oder Skalierung des optischen Codes 34 in dem aufgenommenen Bild 32 auch auf eine Verwendbarkeit des von dem optischen Code 34 aufgenommenen Bildes 32 zur Ableitung einer Positionsinformation geschlossen werden. Ausgehend von einer Struktur des optischen Codes 34, wie anhand von FIG 2 erläutert, hat die in FIG 3 dargestellte Verfälschung des optischen Codes 34, also die Verschiebung und Rotation des optischen Codes 34 in Bezug auf den Erfassungsbereich des Detektors 26, zur Folge, dass ein Teil der komplementären Darstellung 46 der von dem optischen Code 34 umfassten Informationen nicht erfasst ist. Die in den Bildpunkten zwischen den beiden oberen signifikanten Bildelementen 36 und dem im Zentrum des optischen Codes 34 befindlichen signifikanten Bildelement 36 enthalten "eigentliche" Information ist jedoch vollständig erfasst, so dass es auf eine fehlende Information 48 nicht notwendig ankommt. Weil die nur teilweise Erfassung des optischen Codes 34 nur den Teil mit einer komplementären Darstellung 46 der von dem optischen Code 34 enthaltenen Informationen betrifft, während eine obere Hälfte des optischen Codes 34 vollständig erfasst ist, lässt sich nämlich daraus grundsätzlich die in dem optischen Code 34 enthaltene Information ableiten.

Unabhängig davon lässt sich eine fehlende Information 48 aufgrund einer redundanten Information 50 rekonstruieren oder ergänzen. Wenn die in von der unteren Hälfte des optischen Codes 34 umfasste komplementäre Darstellung 46 zum Beispiel zur Verifikation einer anhand der oberen Hälfte des optischen Codes 34 abgeleiteten Positionsinformation verwendet werden soll, kommt es auf die Auswertbarkeit der komplementären Darstellung 46 sehr wohl an. Dann kann die fehlende Information 48 anhand der redundanten Information 50 ergänzt werden und nach einer solchen Ergänzung steht eine vollständige komplementäre Darstellung 46 des optischen Codes 34 zur Verfügung.

Unabhängig von der in FIG 3 dargestellten flächenmäßig nur geringen fehlenden Information 48 kann, wenn zum Beispiel auch das rechte obere signifikante Bildelement 36 außerhalb des Erfassungsbereichs des Detektors 26 liegt, also nicht Bestandteil des Bildes 32 wird, und damit die Absolutinformation 38 (FIG 2) nur teilweise von dem aufgenommenen Bild 32 umfasst ist, auch eine insoweit fehlende Information aus der komplementären Darstellung 46 der Information (FIG 2) gewonnen werden. Bei einer genauen Betrachtung der in den FIG 2 und FIG 3 jeweils dargestellten Bildpunkte, speziell der ersten und der zweiten Zeile der Bildpunkte einerseits im Vergleich mit der letzten und zweitletzten Zeile der Bildpunkte andererseits, fällt auf, dass sich die komplementäre Darstellung 46 der Information aufgrund einer Punktspiegelung an einem Schnittpunkt der beiden Symmetrieachsen des optischen Codes 34 ergibt. Wenn also zum Beispiel einzelne Bildpunkte für eine absolute Information 38 im Bereich eines rechten oberen signifikanten Bildelements 36 von dem aufgenommenen Bild 32 nicht erfasst sind, können die insoweit fehlenden Informationen durch die komplementäre Darstellung 46 derselben Information, also Bildpunkte im Bereich des linken unteren signifikanten Bildelements 36, ergänzt und rekonstruiert werden.

Zum Auswerten eines verfälschten Bildes 32 eines optischen Codes 34 kann vorgesehen sein, dass eine festgestellte Verfälschung, etwa eine festgestellte Verschiebung und/oder eine festgestellte Rotation und/oder eine festgestellte Skalierung durch eine geeignete inverse Transformation kompensiert wird. Alternativ ist auch möglich, dass anhand der festgestellten Verfälschung eine Leseposition, ab der das von dem optischen Code 34 aufgenommene Bild 32 ausgewertet wird, angepasst wird.

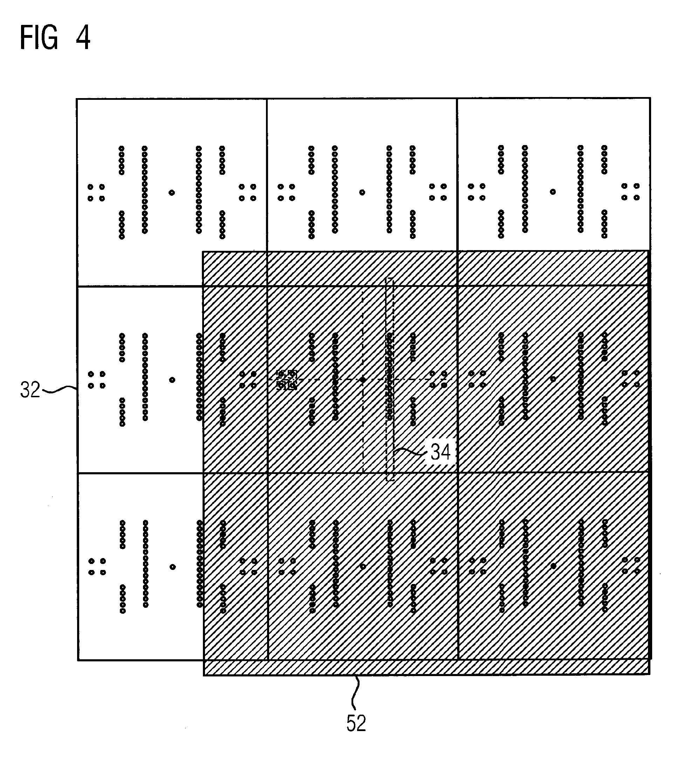

FIG 4 zeigt abschließend ein Beispiel, bei dem von dem mikrostrukturell angelegten optischen Code 34 (FIG 2, FIG 3) nicht nur eine nullte oder erste Beugungsordnung aufgenommen wurde, wie dies in FIG 2 und FIG 3 dargestellt ist, sondern bei dem auch höhere Beugungsordnungen des optischen Codes 34 aufgenommen sind. Die Darstellung in FIG 4 ist allerdings zum Erhalt einer ausreichenden Übersichtlichkeit vereinfacht. Insofern ist der optische Code 34 nur als zeilenförmiger Code und nicht, wie in FIG 2 und FIG 3 gezeigt, als Matrix dargestellt. Beide Varianten, also ein zeilenförmiger Code oder ein matrixförmiger Code, sind denk- und verwendbar.

Die in FIG 4 eingezeichneten horizontalen und vertikalen Linien, welche die Darstellung in insgesamt neun Felder in einer 3x3-Struktur unterteilen, sind nicht Bestandteil des aufgenommenen Bildes 32 und sollen nur die Identifikation einzelner Bildabschnitte erleichtern. Ein im Zentrum des Bildes 32 befindlicher derartiger Bildabschnitt soll demnach ein Bild einer Beugung nullter Ordnung des mikrostrukturell angelegten optischen Codes 34 darstellen. Die rechts und links sowie oben und unten von diesem zentralen Bildabschnitt gezeigten Bildabschnitte sind entsprechend Bilder von Beugungen höherer Ordnung. Entsprechend kann man die einzelnen Bildabschnitte auch als Fenster auffassen und den zentralen Bildabschnitt/das zentrale Fenster zum Beispiel als "Fenster 0,0", das rechts daneben liegende Fenster als "Fenster 1,0" und das auf der linken Seite angrenzende Fenster als "Fenster -1,0" bezeichnen. Gleiches gilt entsprechend für die anderen Fenster, nämlich zum Beispiel das unterhalb des zentralen Fensters liegende Fenster und das rechts daran angrenzende Fenster, die als "Fenster 0,-1" beziehungsweise "Fenster -1,-1" bezeichenbar sind.

Ein in FIG 4 dargestellter Rahmen 52 soll einen tatsächlich mit dem Detektor 26 erfassten Bereich des in FIG 4 dargestellten Bildes 32 bezeichnen. Erkennbar ist, dass entsprechend der eben eingeführten Notation genau vier Fenster, nämlich die Fenster 0,0; 1,0; 0,-1 und -1,-1 erfasst sind. Damit ist also ein Bild aufgrund einer Beugung nullter Ordnung des optischen Codes 34 und mehrere Bilder höherer Beugungsordnung desselben optischen Codes 34 erfasst. Diese mehrfache Erfassung des optischen Codes 34 ermöglicht eine mehrfache Auswertung des optischen Codes 34 und eine Plausibilitätskontrolle hinsichtlich der bei der Auswertung jedes von dem Bild 32 umfassten optischen Codes 34 erhaltenen Positionsinformationen. Dies ist insgesamt eine Alternative zu der in FIG 2 und FIG 3 dargestellten Möglichkeit zur besonders sicheren und belastbaren Auswertung eines optischen Codes. Die in FIG 4 dargestellte Variante zur sicheren Auswertung eines optischen Codes 34 kann grundsätzlich auch mit der in den FIG 2 und FIG 3 dargestellten Variante kombiniert werden, so dass die aus jedem Fenster in FIG 4 ableitbare Positionsinformation anders als bei einer zeilenförmigen Darstellung des optischen Codes 34 noch sicherer oder zumindest noch sicherer auslesbar ist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Die hier vorgelegte Beschreibung betrifft im Wesentlichen zwei Aspekte. Zunächst einen "konstruktiven" Aspekt, nämlich den Übergang man von einem bisher zeilenförmigen Sensor zu einem flächigen Sensor, also insbesondere von einer CCD-Zeile zu einer CCD-Matrix. Danach ein insbesondere in Software implementierten Aspekt, der darauf abgestellt ist, dass aus dem von der CCD-Matrix aufgenommenen Bild erkannt wird, ob dieses eventuell verschoben rotiert oder skaliert ist. Diese Verschiebung, Skalierung oder Rotation wird anhand signifikanter Bildelemente 36 erkannt. Diese signifikanten Bildelemente 36 befinden sich bevorzugt an den äußeren Ecken, entweder allen äußeren Ecken oder zumindest einzelnen äußeren Ecken. Wenn diese signifikanten Bildelemente 36 oder zumindest zwei oder drei signifikante Bildelemente 36 erkannt werden, kann auf eine Verschiebung, Skalierung oder Rotation geschlossen werden und wenn deren Parameter bekannt sind, kann das aufgenommene Bild zum Beispiel durch eine Rücktransformation wieder in eine normale Position, eine normale Skalierung und eine normale Rotation umgerechnet werden und darin kann dann eine Auswertung der von der CCD-Matrix aufgenommenen Daten erfolgen.

Normalerweise werden mindestens drei signifikante Bildelemente 36 benötigt, um zum Beispiel auch unterschiedliche Verzerrungen in x- und y-Richtung erkennen zu können. Wenn man im Einzelfall davon ausgehen kann, dass eine Verzerrung in x-und y-Richtung gleich oder näherungsweise gleich ist, würde im Idealfall auch noch eine Erkennung von zwei signifikanten Bildelementen 36 ausreichen. Für die Erkennung der signifikanten Bildelemente 36 sind Plausibilitätskontrollen erforderlich, denn es darf zum Beispiel nicht irgendein "äußerster Punkt auf einer äußersten Linie" als signifikantes Bildelement 36 angenommen werden, weil bei extremen Verschiebungen dieser äußerste Punkt z.B. auch einfach nur noch der letzte von der Matrix erfasste Bildpunkt sein kann und der tatsächlich signifikante Bildpunkt sich schon lange außerhalb der Matrix befindet. Eine Möglichkeit ist, dass man einen Abstand zwischen diesem vermeintlichen signifikanten Bildpunkt und einem gegenüberliegenden signifikanten Bildpunkt ermittelt und überprüft, ob dieser Abstand noch plausibel ist.

Die signifikanten Bildelemente 36, speziell wenn diese selbst matrixartig strukturiert sind, zum Beispiel mit einer 2x2 oder einer 3x3 Struktur usw., eignen sich auch, um eventuelle Verzerrungen des aufgenommenen Bildes zu erkennen. Bei einem signifikanten Bildelement 36 mit einer 2x2 Struktur, das tatsächlich in Form einer 3x2 Struktur aufgenommen wurde, kann von einer Verzerrung des gesamten aufgenommenen Bildes in x-Richtung ausgegangen werden. Eine solche Verzerrung würde man auch bei den anderen von dem Detektor aufgenommenen Bildpunkten erwarten. Bei der Rücktransformation müsste man gerade versuchen, eine solche Verzerrung wieder aufzuheben.

## Patentansprüche

1. Messwertgeber (16) zum Erhalt einer Positionsinformation,
wobei mit einer Sende-/Empfangseinheit (18) eine Maßver-körperung (12, 14) abgetastet wird,
wobei die Maßverkörperung diffraktiv wirkende mikrostrukturierte Felder umfasst.
wobei sich aufgrund einer Reflektion oder Transmission an der Maßverkörperung ein optischer Code (34) ergibt und
wobei die Sende-/Empfangseinheit (18) zum Erfassen eines Bildes (32) des optischen Codes (34) zumindest einen flächigen Detektor (26) mit einer Mehrzahl von optisch sensitiven Elementen umfasst, die jeweils in einer Mehrzahl von Zeilen und Spalten des Detektors (26) angeordnet sind
**dadurch gekennzeichnet,**
**dass** das Bild des optischen Codes (34) auch ganz oder teilweise Beugungen höherer Ordnung desselben optischen Codes (34) umfasst und
**dass** der Messwertgeber (16) Mittel (28) zur Auswertung des Bildes des optischen Codes (34) umfasst, wobei die Auswertung auch Plausibilitätskontrollen anhand der Beugungen höherer Ordnung umfasst.

2. Verfahren zum Betrieb eines Messwertgebers (16) nach Anspruch 1, wobei das Bild des optischen Codes (34) auch ganz oder teilweise Beugungen höherer Ordnung desselben optischen Codes (34) umfasst und wobei eine Auswertung des Bildes des optischen Codes (34) auch Plausibilitätskontrollen anhand der Beugungen höherer Ordnung umfasst.

3. Verfahren zum Betrieb eines Messwertgebers (16) nach Anspruch 2, wobei mit dem Detektor (26) ein Bild (32) des optischen Codes (34) aufgenommen wird, wobei in dem aufgenommenen Bild (32) signifikante Bildelemente (36) identifiziert werden und wobei identifizierte signifikante Bildelemente (36) als Grundlage für eine Auswertung des Bildes (32) verwendet werden, indem mit mindestens zwei identifizierten signifikanten Bildelementen (36) eine Verschiebung oder eine Rotation des aufgenommenen Bildes (32) ermittelt wird.

4. Verfahren zum Betrieb eines Messwertgebers (16) nach Anspruch 3, wobei bei einer ermittelten Verschiebung oder Rotation des aufgenommenen Bildes (32) in dem Bild (32) fehlende Teile des optischen Codes (34) anhand der von dem optischen Code umfassten redundanten Information (50) ergänzt werden.

5. Verfahren nach Anspruch 3 oder 4, wobei eine ermittelte Verschiebung oder Rotation des aufgenommenen Bildes (32) kompensiert wird.

6. Verfahren nach Anspruch 5, wobei eine ermittelte Verschiebung oder Rotation des aufgenommenen Bildes (32) kompensiert wird, indem auf das Bild eine Transformation angewandt wird, welche die ermittelte Verschiebung oder Rotation kompensiert, und/oder wobei eine ermittelte Verschiebung oder Rotation des aufgenommenen Bildes (32) kompensiert wird, indem bei einer Auswertung des Bildes (32) eine Leseposition entsprechend der ermittelten Verschiebung oder Rotation angepasst wird.

7. Computerprogramm mit Programmcode-Mitteln, um alle Schritte von jedem beliebigen der Ansprüche 2 bis 6 durchzuführen, wenn das Computerprogramm durch eine Verarbeitungseinheit (28) des Messwertgebers (16) ausgeführt wird.

8. Digitales Speichermedium mit elektronisch auslesbaren Steuersignalen, die so mit einer Verarbeitungseinheit (28) zusammenwirken können, dass alle Schritte eines Verfahrens nach einem der Ansprüche 2 bis 6 ausgeführt werden.

9. Messwertgeber (16) nach Anspruch 1 mit einer Verarbeitungseinheit (28) und einem Speicher, in den ein Computerprogramm nach Anspruch 7 geladen ist, das im Betrieb des Messwertgebers (16) durch die Verarbeitungseinheit (28) ausgeführt wird.

10. Antriebseinheit mit einem Messwertgeber (16) nach einem der Ansprüche 1 oder 9.

## Claims

1. Data encoder (16) for receiving position information, wherein a material measure (12, 14) is sampled with an emitting/receiving unit (18),
wherein the material measure includes microstructured fields which act diffractively
with an optical code (34) being produced due to a reflection or transmission to the material measure and
wherein the emitting/receiving unit (18) for detecting an image (32) of the optical code (34) includes at least a surface detector (26) with a multitude of optically sensitive elements, which are arranged in a multitude of rows and columns of the detector (26) in each instance
**characterised in that**
the image of the optical code (34) also includes complete or partial higher order diffractions of the same optical code (34) and that the data encoder (16) includes means (28) for analysing the image of the optical code (34), wherein the analysis also includes plausibility controls by means of the higher order diffractions.

2. Method for operating a data encoder (16) according to claim 1, wherein the image of the optical code (34) also includes complete or partial higher order diffractions of the same optical code (34) and with an analysis of the image of the optical code (34) also including plausibility controls by means of the higher order diffractions.

3. Method for operating a data encoder (16) according to claim 2, wherein an image (32) of the optical code (34) is recorded with the detector (26), with significant image elements (36) being identified in the recorded image (32) and with identified significant image elements (36) being used as a basis for an analysis of the image (32), in which with at least two identified significant image elements (36), a shift or a rotation of the recorded image (32) is determined.

4. Method for operating a data encoder (16) according to claim 3, wherein in the case of a determined shift or rotation of the recorded image (32) missing parts of the optical code (34) in the image (32) are made complete by means of the redundant information (50) included in the optical code.

5. Method according to claim 3 or 4, wherein a determined shift or rotation of the recorded image (32) is compensated for.

6. Method according to claim 5, wherein identified determined shift or rotation of the recorded image (32) is compensated for, in that a transformation is applied to the image, which compensates for the determined shift or rotation, and/or wherein a determined shift or rotation of the recorded image (32) is compensated for, in that during an analysis of the image (32), a reading position is adjusted in accordance with the determined shift or rotation.

7. Computer program with program code means to carry out all steps from any one of the claims 2 to 6 , when the computer program is run via a processing unit (28) of the data encoder (16).

8. Digital storage medium with electronically readable control signals which can work together with a processing unit (28) in order that all steps of a method are realized according to one of the claims 2 to 6.

9. Data encoder (16) according to claim 1 with a processing unit (28) and a memory into which is loaded a computer program according to claim 7, which during operation of the data encoder (16) is realized via the processing unit (28).

10. Drive unit with a data encoder (16) according to one of the claims 1 or 9.

## Revendications

1. Transmetteur ( 16 ) de valeurs de mesure pour l'obtention d'une information de position,
dans lequel une représentation ( 12, 14 ) d'une grandeur est analysée par une unité ( 18 ) d'émission/réception,
dans lequel la représentation d'une grandeur comprend des champs microstructurés agissant par diffraction,
dans lequel un code ( 34 ) optique est, sur la base d'une réflexion ou d'une transmission, obtenu sur la représentation d'une grandeur et
dans lequel l'unité ( 18 ) d'émission/réception comprend, pour la détection d'une image ( 32 ) du code ( 34 ) optique, au moins un détecteur ( 26 ) en deux dimensions, ayant une multiplicité d'éléments sensibles optiquement, qui sont disposés respectivement en une multiplicité de lignes et de colonnes du détecteur ( 26 ),
**caractérisé**
**en ce que** l'image du code ( 34 ) optique comprend aussi, en tout ou partie, des diffractions d'ordre supérieur du même code ( 34 ) optique et
**en ce que** le transmetteur ( 16 ) de valeurs de mesure comprend des moyens ( 28 ) d'exploitation de l'image du code ( 34 ) optique, l'exploitation comprenant des contrôles de vraisemblance au moyen des diffractions d'ordre supérieur.

2. Procédé pour faire fonctionner un transmetteur ( 16 ) de valeurs de mesure suivant la revendication 1, dans lequel l'image du code ( 34 ) optique comprend aussi, en tout ou partie, des diffractions d'ordre supérieur du même code ( 34 ) optique et dans lequel une exploitation de l'image du code ( 34 ) optique comprend aussi des contrôles de vraisemblance à l'aide des diffractions d'ordre supérieur.

3. Procédé pour faire fonctionner un transmetteur ( 16 ) de valeurs de mesure suivant la revendication 2, dans lequel on enregistre, avec le détecteur ( 26 ), une image ( 32 ) du code ( 34 ) optique, dans lequel on identifie, dans l'image ( 32 ) enregistrée, des éléments ( 36 ) d'image significatifs et dans lequel on utilise des éléments ( 36 ) d'image significatifs identifiés comme base pour une exploitation de l'image ( 32 ), en déterminant, par au moins deux éléments ( 36 ) d'image significatifs identifiés, un déplacement ou une rotation de l'image ( 32 ) enregistrée.

4. Procédé pour faire fonctionner un transmetteur ( 16 ) de valeurs de mesure suivant la revendication 3, dans lequel, lorsqu'un déplacement ou une rotation de l'image ( 32 ) enregistrée a été déterminé( e ), on complète des parties du code ( 34 ) optique manquantes dans l'image ( 32 ) à l'aide d'informations ( 50 ) redondantes comprises dans le code optique.

5. Procédé suivant la revendication 3 ou 4, dans lequel on compense un déplacement ou une rotation déterminé( e ) de l'image ( 32 ) enregistrée.

6. Procédé suivant la revendication 5, dans lequel on compense un déplacement ou une rotation déterminé( e ) de l'image ( 32 ) enregistrée en appliquant à l'image une transformation, qui compense le déplacement ou la rotation déterminé ( e ) et/ou dans lequel on compense un déplacement ou une rotation déterminé( e ) de l'image ( 32 ) enregistrée en adaptant, lors d'une exploitation de l'image ( 32 ), une position de lecture conformément au déplacement ou à la rotation déterminé( e ).

7. Programme d'ordinateur ayant des moyens de code de programme pour effectuer tous les stades de l'une quelconque des revendications 2 à 6, lorsque le programme d'ordinateur est réalisé par une unité ( 28 ) de traitement du transmetteur ( 16 ) de valeurs de mesure.

8. Support de mémoire numérique ayant des signaux de commande pouvant être lus électroniquement, qui peuvent coopérer avec une unité ( 28 ) de traitement, de manière à ce que tous les stades d'un procédé, suivant l'une des revendications 2 à 6, soient effectués.

9. Transmetteur ( 16 ) de valeurs de mesure suivant la revendication 1, comprenant une unité ( 28 ) de traitement et une mémoire, dans laquelle est chargé un programme d'ordinateur suivant la revendication 7, qui, lorsque le transmetteur ( 16 ) de valeurs de mesure est en fonctionnement, est effectué par l'unité ( 28 ) de traitement.

10. Unité d'entraînement ayant un transmetteur ( 16 ) de valeurs suivant l'une des revendications 1 ou 9.
